# EUROPEAN PATENT SPECIFICATION

(11) **EP 2 610 028 B1**
(45) Date of publication and mention of the grant of the patent: **12.12.2018**
(21) Application number: 11195966.4
(22) Date of filing: 28.12.2011
(51) Int. Cl.: B23H 7/26

(54) **Triaxial driving device for an electrodischarge machine tool**
Dreiaxiale Antriebsvorrichtung für ein Elektroerosionsmaschinenwerkzeug
Dispositif de commande triaxiale pour machine-outil à électro-décharge

(43) Date of publication of application: 03.07.2013
(73) Proprietor: Yihawjet Enterprises Co., Ltd., Tainan City (TW)
(72) Inventor: Hsu, Shih-Lung, Tainan City (TW); Tung, Chin-Juei, Tainan City (TW); Hsu, Hsiung-Sheng, Tainan City (TW); Wu, Cheng-Chang, Tainan City (TW)
(74) Representative: Viering, Jentschura & Partner mbB Patent- und Rechtsanwälte

(56) References cited:
- EP-A2- 0 504 691
- FR-A1- 2 791 588
- JP-A- 56 003 141
- JP-A- 2002 036 032

## Description

### 1. Field of the Invention

The present invention relates to a triaxial driving device for an electrodischarge machine tool, and more particularly to a triaxial driving device that can be mounted between a three-linear-axes drive mechanism and an electrode tool of the electrodischarge machine tool to provide further triaxial movement to the electrode tool and can provide six-axial motion to the electrodischarge machine tool. Such a device is known from document JP -2002036032.

### 2. Description of the Prior Arts

Conventional electrodischarge machine tools have been extensive used in mold manufacture and machine work. The conventional electrodischarge machine tool has a three-liners-axes mechanism and an electrode tool. The three-liners-axes mechanism can provide three-linear movement (X-, Y- and Z-axis directions). The electrode tool is attached securely to one of the linear axes of the three-liners-axes mechanism to form an electrodischarge machining (E.D.M) process on a work-piece.

Although the conventional electrodischarge machine tool can be used to process the work-piece, the conventional electrodischarge machine tool cannot process a work-piece with complicated structures. Then, a dividing-plate driving device is mounted on one of the linear axes of the three-liners-axes mechanism and is connected to the electrode tool to provide further triaxial movement to the electrode tool. However, the precision of the dividing-plate driving device is not sufficient, and the control conducting wires of the dividing-plate driving device are exposed out of the dividing-plate driving device and may be entangled with the external devices of the conventional electrodischarge machine tool.

To overcome the shortcomings, the present invention provides a triaxial driving device for an electrodischarge machine tool to mitigate or obviate the aforementioned problems.

The main objective of the present invention is to provide a triaxial driving device for an electrodischarge machine tool, and more particularly to a triaxial driving device that can be mounted between a three-linear-axes drive mechanism and an electrode tool of the electrodischarge machine tool to provide further triaxial movement to the electrode tool and can provide six-axial motion to the electrodischarge machine tool.

The present invention provides a triaxial driving device in accordance with claim 1.

Other objectives, advantages and novel features of the invention will become more apparent from the following detailed description when taken in conjunction with the accompanying drawings.

### IN THE DRAWINGS:

Fig. 1 is a perspective view of a triaxial driving device for an electrodischarge machine tool in accordance with the present invention;
Fig. 2 is a side view of the triaxial driving device in Fig. 1;
Fig. 3 is a side view in partial section of triaxial driving device in Fig. 2 along line 3-3;
Fig. 4 is another side view in partial section of triaxial driving device in Fig. 2;
Fig. 5 is an operational perspective view of the triaxial driving device in Fig. 1 mounted on an electrodischarge machine tool;
Fig. 6 is an operational side view of the electrodischarge machine tool with the triaxial driving device in Fig. 5; and
Fig. 7 is an enlarged operational side view of the triaxial driving device in Fig. 6.

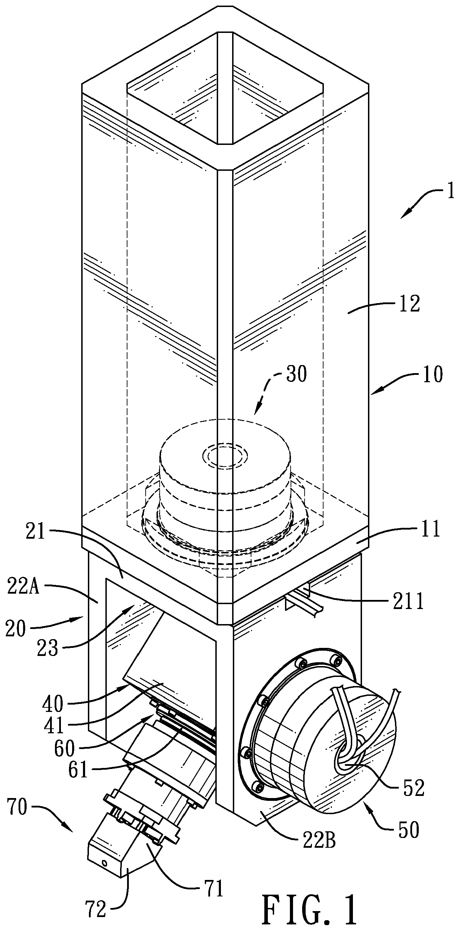

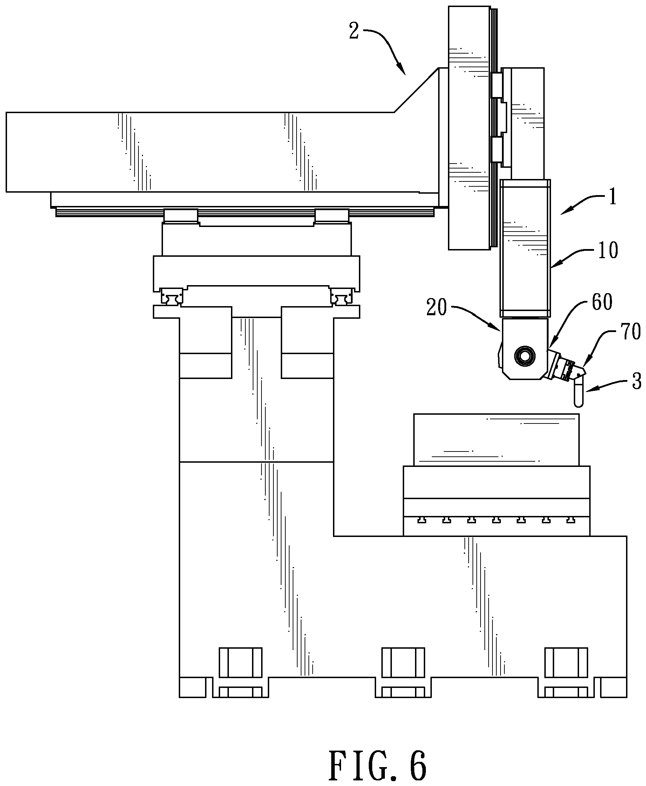

With reference to Figs. 1, 5 and 6, a triaxial driving device 1 in accordance with the present invention for an electrodischarge machine tool having a three-liners-axes mechanism 2 with three axes (X-, Y- and Z-axes) and an electrode tool 3 comprises a connecting mount 10, a first axial rotator 30, a base 20, a supporting arm 40, a second axial rotator 50, a third axial rotator 60 and an electrode holder 70.

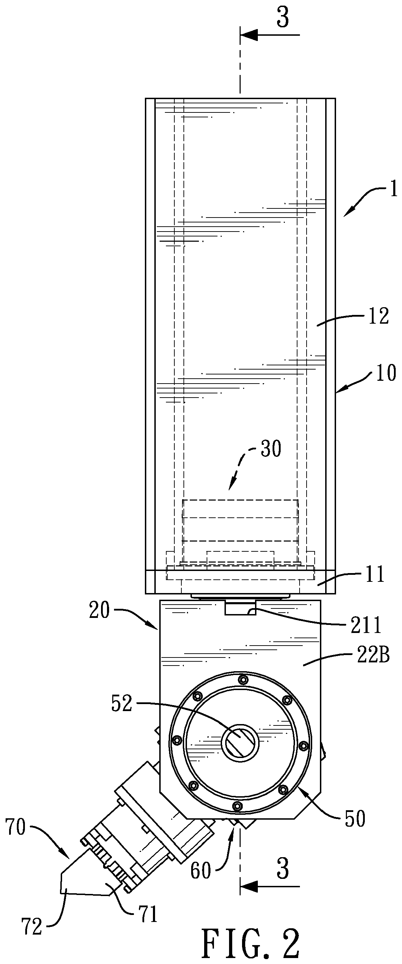

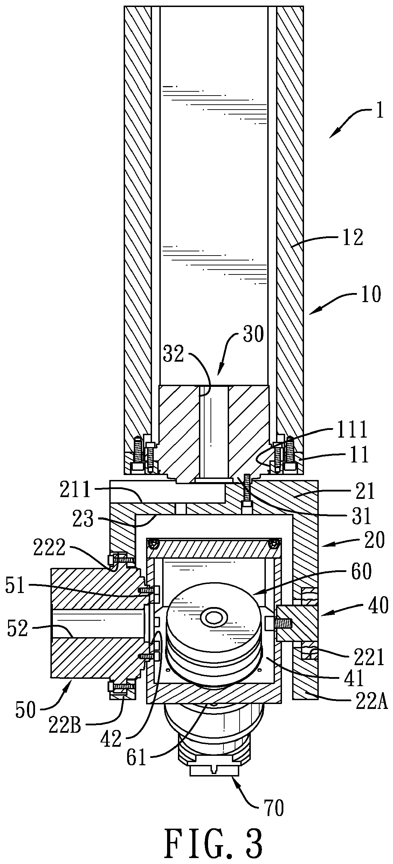

The connecting mount 10 is connected securely to the three-liners-axes mechanism 2 of the electrodischarge machine tool and has a seat tube 12 and a bottom board 11. The seat tube 12 is hollow and is connected securely to the three-liners-axes mechanism 2 along the Z-axis of the three-liners-axes mechanism 2 and has a chamber and a bottom end. With further reference to Figs. 2 and 3, the bottom board 11 is mounted securely on the bottom end of the seat tube 12 and has a central hole 111 formed through the bottom board 11 and communicates with the chamber of the seat tube 12.

The first axial rotator 30 is mounted in the connecting mount 10, is connected securely to the bottom board 11 and has a top, a bottom, a rotating head 31 and a through hole 32. The top of the first axial rotator 30 is mounted in the chamber of the seat tube 12. The bottom of the first axial rotator 30 extends out of the connecting mount 10 via the central hole 111 of the bottom board 11. The rotating head 31 is mounted on the bottom of the first axial rotator 30. The through hole 32 is formed through the top and the bottom and communicates with the chamber of the seat tube 12.

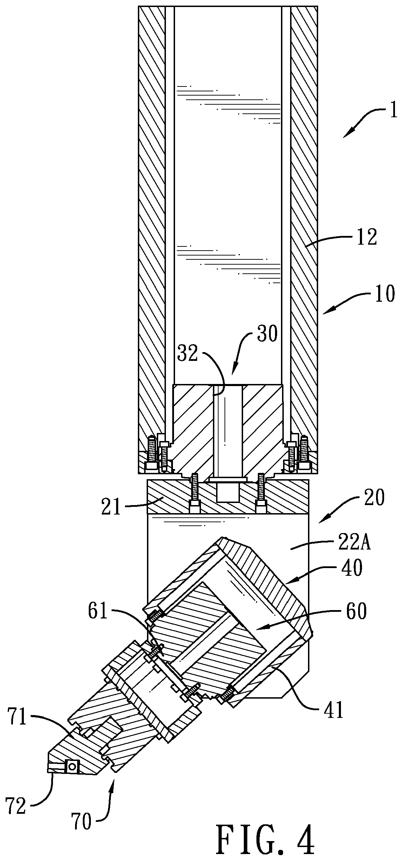

With reference to Figs. 3 and 4, the base 20 is connected securely to the first axial rotator 30 and has a top board 21, two sidewalls 22A, 22B and a space 23. The top board 21 is securely connected to the rotating head 31 of the first axial rotator 30 to enable the base 20 to rotate relative to the connecting mount 10 around the three-liners-axes mechanism 2 along the Z-axis of the three-liners-axes mechanism 2 and has a top, a bottom, a center, a side edge and a wire groove 211. The top of the top board 21 is securely connected to the rotating head 31. The wire groove 211 is formed in the top of the top board 21 between the center and the side edge of the top board 21 and communicates with the through hole 32 of the first axial rotator 30.

The sidewalls 22A, 22B are formed on and protrude downwardly from the bottom of the top board 21 and are parallel with each other, and each sidewall 22A, 22B has a through hole 221, 222. The through holes 221, 222 are respectively formed through the sidewalls 22A, 22B and align with each other. The space 23 is formed in the base 20 between the top board 21 and the sidewalls 22A, 22B and communicates with the wire groove 211.

The supporting arm 40 is rotatably mounted in the space 23 of the base 20 and has an outer end, an inner end and a connecting frame 41. The outer end of the supporting arm 40 is rotatably mounted in the through hole 221 of one of the sidewalls 22A, 22B of the base 20. The inner end of the supporting arm 40 extends in the space 23 of the base 20. The connecting frame 41 is connected to the inner end of the supporting arm 40 and has two opposite sides, a front side and a through hole 42. The opposite sides of the connecting frame 41 respectively face the sidewalls 22A, 22B of the base 20. One of the opposite sides of the connecting frame 41 is securely connected to the inner end of the supporting arm 40. The front side of the connecting frame 41 is formed with and between the opposite sides of the connecting frame 41. The through hole 42 is formed through the opposite side of the connecting frame 41 that is opposite to the supporting arm 40 and aligns with the through hole 222 of the corresponding sidewall 22B of the base 20.

The second axial rotator 50 is securely connected to the base 20 and the supporting arm 40 and has an inner side, an outer side, a rotating head 51 and a through hole 52. The inner side of the second axial rotator 50 is securely mounted in the through hole 222 of the sidewall 22B that faces the through hole 42 of the connecting frame 41. The outer side of the second axial rotator 50 extends out of the base 20 via the corresponding through hole 222. The rotating head 51 is mounted on the inner side of the second axial rotator 50 and is securely connected to the opposite side of the connecting frame 41 that is opposite to the supporting arm 40 to enable the connecting frame 41 to rotate relative to the base 20 around the three-liners-axes mechanism 2 along the X-axis of the three-liners-axes mechanism 2. The through hole 52 is formed though the sides of the second axial rotator 50 and communicates with the through hole 42 of the connecting frame 41.

The third axial rotator 60 is securely connected to the supporting arm 40 and has an inner side, an outer side and a rotating head 61. The inner side of the third axial rotator 60 is securely mounted in the front side of the connecting frame 41 of the supporting frame 40. The outer side of the third axial rotator 60 extends out of the connecting frame 41 via the front side of the connecting frame 41. The rotating head 621 is mounted on the outer side of the third axial rotator 60.

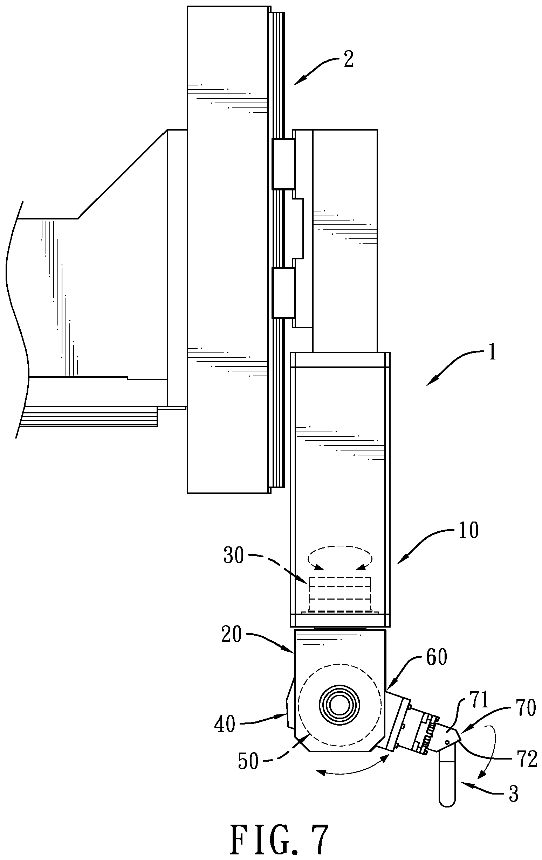

With reference to Figs. 4, 6 and 7, the electrode holder 70 is securely connected to the third axial rotator 60, is connected to the electrode tool 3 of the electrodischarge machine tool and has a mounting end, a connecting end and a clamping block 71. The mounting end of the electrode holder 70 is securely mounted on the rotating head 61 of the third axial rotator 60 to enable the electrode holder 70 to rotate relative to the connecting frame 41 of the supporting arm 40 around the three-liners-axes mechanism 2 along the Y-axis of the three-liners-axes mechanism 2. The connecting end of the electrode holder 70 is formed with the mounting end of the electrode holder 70 opposite to the rotating head 61 of the third axial rotator 60. The clamping block 71 is mounted on the connecting end of the electrode holder 70 and has a lower end and a nose 72. The nose 72 is formed on the lower end of the clamping block 71 and has an angle of 45 degrees relative to an axis of the electrode holder 70.

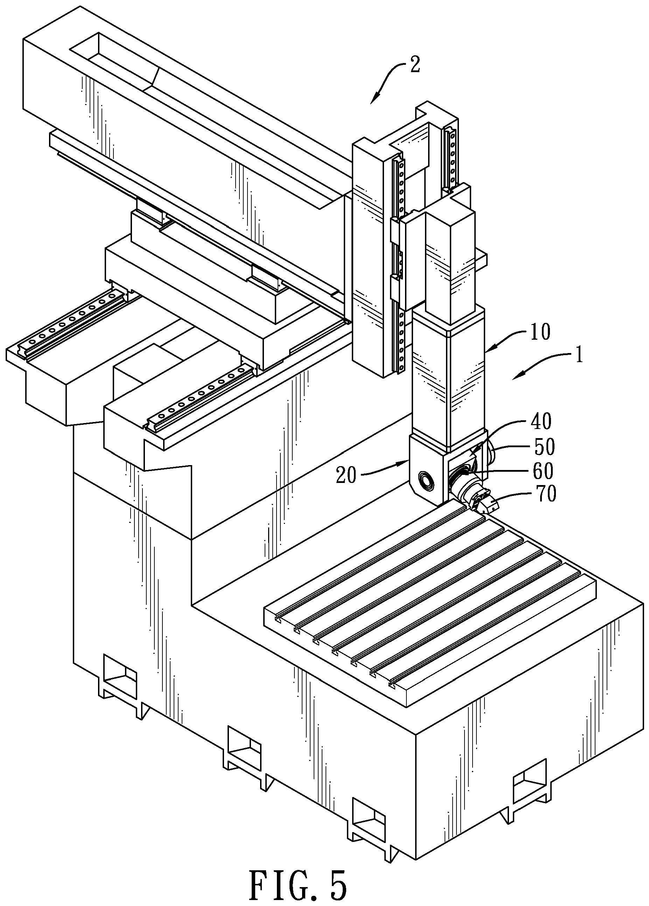

With reference to Figs. 5 to 7, when the triaxial driving device 1 in accordance with the present invention is mounted on the electrodischarge machine tool between the three-liners-axes mechanism 2 and the electrode tool 3, the axial rotators 30, 50, 60 can be controlled by the electrodischarge machine tool. The axial rotators 30, 50, 60 can provide three-dimensional rotations to the electrode tool 3 that is mounted on the electrode holder 70. In addition, the three-liners-axes mechanism 2 also can provide three-directional movements to the triaxial driving device 1. Then, the electrode tool 3 that is mounted on the electrode holder 70 can obtain six degrees of freedom to manufacture work-pieces with complicated structures and to provide a preferred working accuracy.

Furthermore, with reference to Figs. 1, 3 and 4, the through hole 32 of the first axial rotator 30 communicates with the chamber of the seat tube 12 and the wire groove 211 and the space 23 of the base 20, and the through hole 52 of the second axial rotator 50 communicates with the through hole 42 of the connecting frame 41 of the supporting arm 40. Then, the control conducting wires of the electrodischarge machine tool can be electrically connected to the axial rotators 30, 50, 60 and the electrode holder 70 via the chamber of the seat tube 12, the wire groove 211 of the top board 21 and the through holes 32, 52, 42 of the axial rotators 30, 50 and the connecting frame 41 of the supporting arm 40. Therefore, when the triaxial driving device 1 is mounted on the electrodischarge machine tool between the three-liners-axes mechanism 2 and the electrode tool 3, the control conducting wires of the electrodischarge machine tool will not be entangled with the external devices of the electrodischarge machine tool.

Even though numerous characteristics and advantages of the present invention have been set forth in the foregoing description, together with details of the structure and features of the invention, the disclosure is illustrative only. Changes may be made in the details, especially in matters of shape, size, and arrangement of parts within the the terms in which the appended claims are expressed.

## Claims

1. A triaxial driving device for an electrodischarge machine tool having a three-liners-axes mechanism (2) with three axes (X-, Y- and Z-axes) and an electrode tool (3), the triaxial driving device (1) **characterized in that** it comprises:
a first axial rotator (30) having a top, a bottom, a rotating head (31) and a through hole (32);
a second axial rotator (50) having an inner side, an outer side, a rotating head (51) and a through hole (52); and
a third axial rotator (60) having an inner side, an outer side and a rotating head (61);
whereby the first, second and third rotators (30, 50, 60) are adapted to be controlled by the electrodischarge machine tool to provide three-dimensional rotations to the electrode tool (3);
a connecting mount (10) being adapted to connect securely to the three-liners-axes mechanism (2) of the electrodischarge machine tool, and having a hollow seat tube (12) and a bottom board (11);
whereby the first axial rotator (30) is mounted on the bottom board (11) of the connecting mount (10), the top of the first axial rotator (30) is mounted in the hollow seat tube (12) and the bottom of the first axial rotator (30) extends out of the connecting mount (10);
a base (20) securely connected to the rotating head (31) of the first axial rotator (30) to enable the base (20) to rotate relative to the connecting mount (10) around the three-liner-axes mechanism (2) along the Z-axis of the three-liners-axes mechanism (2) and having two sidewalls (22A, 22B) with a space (23) in between the said sidewalls (22A, 22B), said sidewalls (22A, 22B) having aligned through holes (221, 222) formed therein;
a supporting arm (40) rotatably mounted in the space (23) of the base (20) and having an outer end, an inner end and a connecting frame (41), the outer end being rotatably mounted in one of the through holes (221) of the base (20), the inner end of the supporting arm (40) extending in the space (23) of the base (20), and the connecting frame (41) connected to the inner end of the supporting arm (40) and having two opposite sides, a front side and a through hole (42), the opposite sides of the connecting frame (41) respectively facing the sidewalls (22A, 22B) of the base (20);
whereby the inner side of the second axial rotator (50) is securely mounted in the through hole (222) of the sidewall (22B) of the base (20), the outer side of the second axial rotator (50) extends out of the base (20), and the rotating head (51) of the second axial rotator (50) is securely connected to one of the opposite sides of the connecting frame (41) to enable the connecting frame (41) to rotate relative to the base (20) around the three-liners-axes mechanism (2) along the X-axis of the three-liners-axes mechanism (2);
whereby the inner side of the third axial rotator (60) is securely connected to the front side of the connecting frame (41) of the supporting frame (40), and the outer side of the third axial rotator (60) extends out of the connecting frame (41);
an electrode holder (70) being adapted to connect to the electrode tool (3) of the electrodischarge machine tool, and having a mounting end, a connecting end and a clamping block (71); and
whereby the mounting end of the electrode holder (70) is securely mounted on the rotating head (61) of the third axial rotator (60) to enable the electrode holder (70) to rotate relative to the connecting frame (41) of the supporting arm (40) around the three-liners-axes mechanism (2) along the Y-axis of the three-liners-axes mechanism (2).

2. The triaxial driving device as claimed in claim 1, wherein
the seat tube (12) is adapted to connect securely to the three-liners-axes mechanism (2) along the Z-axis of the three-liners-axes mechanism (2) and has
a chamber; and
a bottom end; and
the bottom board (11) is mounted securely on the bottom end of the seat tube (12) and has a central hole (111) formed through the bottom board (11) and communicating with the chamber of the seat tube (12);
the top of the first axial rotator (30) is mounted in the chamber of the seat tube (12);
the bottom of the first axial rotator (30) extends out of the connecting mount (10) via the central hole (111) of the bottom board (11); and
the base (20) has
a top board (21) securely connected to the rotating head (31) of the first axial rotator (30) and having
a top securely connected to the rotating head (31); and
a bottom; and
wherein the sidewalls (22A, 22B) of the base (20) are formed on and protrude downwardly from the bottom of the top board (21), and are parallel with each other.

3. The triaxial driving device as claimed in claim 2, wherein
the top board (21) has
a center;
a side edge; and
a wire groove (211) formed in the top of the top board (21) between the center and the side edge of the top board (21) and communicating with the through hole (32) of the first axial rotator (30);
the through hole (32) of the first axial rotator (30) is formed through the top and the bottom of the first axial rotator (30) and communicates with the chamber of the seat tube (12);
one of the opposite sides of the connecting frame (41) is securely connected to the inner end of the supporting arm (40); and
the through hole (42) of the connecting frame (41) is formed through one of the opposite sides of the connecting frame (41) that is opposite to the supporting arm (40), and aligns with the through hole (222) of a corresponding sidewall (22B) of the base (20);
the front side of the connecting frame (41) is formed with and between the opposite sides of the connecting frame (41);
the inner side of the second axial rotator (50) is securely mounted in the through hole (222) of the sidewall (22B) that faces the through hole (42) of the connecting frame (41);
the outer side of the second axial rotator (50) extends out of the base (20) via the corresponding through hole (222);
the rotating head (51) is securely connected to one of the opposite sides of the connecting frame (41) that is opposite to the supporting arm (40); and
the second axial rotator (50) has a through hole (52) formed though the sides of the second axial rotator (50) and communicating with the through hole (42) of the connecting frame (41).

4. The triaxial driving device as claimed in claim 1 or 2 or 3, wherein
the connecting end of the electrode holder (70) is formed with the mounting end of the electrode holder (70) opposite to the rotating head (61) of the third axial rotator (60); and
the clamping block (71) of the electrode holder (70) is mounted on the connecting end of the electrode holder (70) and has
a lower end; and
a nose (72) formed on the lower end of the clamping block (71) and having an angle of 45 degrees relative to an axis of the electrode holder (70).

5. The triaxial driving device as claimed in claim 4, wherein
the rotating head (31) of the first axial rotator (30) is mounted on the bottom of the first axial rotator (30);
the second axial rotator (50) is securely connected to the base (20) and the supporting frame (40), the inner side of the second axial rotator (50) is securely mounted in the base (20), the outer side of the second axial rotator (50) extends out of the base (20), and the rotating head (51) of the second axial rotator (50) is mounted on the inner side of the second axial rotator (50);
the triaxial driving device (1) has a top mounted in the connecting mount (10); and
the third axial rotator (60) is securely connected to the supporting arm (40), the inner side of the third axial rotator (60) is securely mounted in the front side of the connecting frame (41) of the supporting arm (40), the outer side of the third axial rotator (60) extends out of the connecting frame (41) via the front side of the connecting frame (41), and the rotating head (61) is mounted on the outer side of the third axial rotator (60).

## Patentansprüche

1. Eine dreiaxiale Antriebsvorrichtung für ein Elektroerosionsmaschinenwerkzeug mit einem Dreiführungsachsenmechanismus (2) mit drei Achsen (X-, Y- und Z-Achsen) und einem Elektrodenwerkzeug (3), wobei die dreiaxiale Antriebsvorrichtung (1) **dadurch gekennzeichnet ist, dass** sie aufweist:
einen ersten axialen Rotator (30) aufweisend ein Oberteil, ein Unterteil, einen Rotorkopf (31) und eine Durchgangsöffnung (32);
einen zweiten axialen Rotator (50) aufweisend eine innere Seite, eine äußere Seite, einen Rotorkopf (51) und eine Durchgangsöffnung (52); und
einen dritten axialen Rotator (60) aufweisend eine innere Seite, eine äußere Seite und einen Rotorkopf (61);
wobei der erste, der zweite und der dritte Rotator (30, 50, 60) eingerichtet sind, durch das Elektroerosionsmaschinenwerkzeug gesteuert zu werden, um dem Elektrodenwerkzeug (3) dreidimensionale Rotationen zu bieten;
eine Verbindungshalterung (10), die eingerichtet ist, sicher mit dem Dreiführungsachsenmechanismus (2) des Elektroerosionsmaschinenwerkzeugs verbunden zu sein, und ein hohles Aufnahmerohr (12) und eine untere Platte (11) aufweist;
wobei der erste axiale Rotator (30) an der unteren Platte (11) der Verbindungshalterung (10) angebracht ist, wobei der Oberteil des ersten axialen Rotators (30) in dem hohlen Aufnahmerohr (12) angebracht ist, und der Unterteil des ersten axialen Rotators (30) sich aus der Verbindungshalterung (10) heraus erstreckt;
eine Basis (20), die sicher mit dem Rotorkopf (31) des ersten axialen Rotators (30) verbunden ist, um es der Basis (20) zu ermöglichen, bezüglich der Verbindungshalterung (10) um den Dreiführungsachsenmechanismus (2) entlang der Z-Achse des Dreiführungsachsenmechanismus (2) zu rotieren, und die zwei Seitenwände (22A, 22B) mit einem Raum (23) zwischen den Seitenwänden (22A, 22B) aufweist, wobei die Seitenwände (22A, 22B) ausgerichtete Durchgangslöcher (221, 222) aufweisen, die darin gebildet sind;
einen Tragarm (40), der drehbar in dem Raum (23) der Basis (20) angeordnet ist, und ein äußeres Ende, ein inneres Ende und einen Verbindungsrahmen (41) aufweist, wobei das äußere Ende drehbar in einem der Durchgangslöcher (221) der Basis (20) angebracht ist, das innere Ende des Tragarms (40) sich in den Raum (23) der Basis (20) erstreckt, und wobei der Verbindungsrahmen (41) mit dem inneren Ende des Tragarms (40) verbunden ist und zwei gegenüberliegende Seiten, eine vordere Seite und eine Durchgangsöffnung (42) aufweist, wobei die gegenüberliegenden Seiten des Verbindungsrahmens (41) jeweils den Seitenwänden (22A, 22B) der Basis (20) zugewandt sind;
wobei die innere Seite des zweiten axialen Rotators (50) sicher in der Durchgangsöffnung (222) der Seitenwand (22B) der Basis (20) angebracht ist, wobei sich die äußere Seite des zweiten axialen Rotators (50) aus der Basis (20) heraus erstreckt, und der Rotorkopf (51) des zweiten axialen Rotators (50) sicher mit einer der gegenüberliegenden Seiten des Verbindungsrahmens (41) verbunden ist, um es dem Verbindungsrahmen (41) zu ermöglichen, bezüglich der Basis (20) um den Dreiführungsachsenmechanismus (2) entlang der X-Achse des Dreiführungsachsenmechanismus (2) zu rotieren;
wobei die innere Seite des dritten axialen Rotators (60) sicher mit der Vorderseite des Verbindungsrahmens (41) des Tragrahmens (40) verbunden ist, und die äußere Seite des dritten axialen Rotators (60) sich aus dem Verbindungsrahmen (41) heraus erstreckt;
eine Elektrodenhalterung (70), die eingerichtet ist, mit dem Elektrodenwerkzeug (3) des Elektroerosionsmaschinenwerkzeugs verbunden zu sein, und ein Halterungsende, ein Verbindungsende und einen Klemmblock (71) aufweist; und
wobei das Halterungsende der Elektrodenhalterung (70) sicher an dem Rotorkopf (61) des dritten axialen Rotators (60) gehaltert ist, um es der Elektrodenhalterung (70) zu ermöglichen, bezüglich des Verbindungsrahmens (41) des Tragarms (40) um den Dreiführungsachsenmechanismus (2) entlang der Y-Achse des Dreiführungsachsenmechanismus (2) zu rotieren.

2. Die dreiaxiale Antriebsvorrichtung gemäß Anspruch 1, wobei
das Aufnahmerohr (12) eingerichtet ist, sicher mit dem Dreiführungsachsenmechanismus (2) entlang der Z-Achse des Dreiführungsachsenmechanismus (2) verbunden zu sein und aufweist:
eine Kammer; und
ein unteres Ende; und
die untere Platte (11) ist sicher an dem unteren Ende des Aufnahmerohrs (12) verbunden und weist eine zentrale Öffnung (111) auf, die durch die untere Platte (11) gebildet ist und mit der Kammer des Aufnahmerohrs (12) in Verbindung steht;
wobei der Oberteil des ersten axialen Rotators (30) in der Kammer des Aufnahmerohrs (12) angebracht ist;
wobei der untere Teil des ersten axialen Rotators (30) sich aus der Verbindungshalterung (10) durch die zentrale Öffnung (111) der unteren Platte (11) erstreckt; und
wobei die Basis (20)
eine obere Platte (21) aufweist, die mit dem Rotorkopf (31) des ersten axialen Rotators (30) sicher verbunden ist und aufweist:
ein Oberteil, das sicher mit dem Rotorkopf (31) verbunden ist; und
ein Unterteil; und
wobei die Seitenwände (22A, 22B) der Basis (20) gebildet sind an und sich nach unten erstrecken von dem unteren Teil der oberen Platte (21), und parallel zueinander sind.

3. Die dreiaxiale Antriebsvorrichtung gemäß Anspruch 2, wobei die obere Platte (21) aufweist:
ein Zentrum;
eine Seitenkante; und
eine Kabelnut (211), die in dem Oberteil der oberen Platte (21) zwischen dem Zentrum und der Seitenkante der oberen Platte (21) gebildet ist und mit der Durchgangsöffnung (32) des ersten axialen Rotators (30) verbunden ist;
wobei die Durchgangsöffnung (32) des ersten axialen Rotators (30) durch den Oberteil und den Unterteil des ersten axialen Rotators (30) gebildet ist und mit der Kammer des Aufnahmerohrs (12) verbunden ist;
wobei eine der gegenüberliegenden Seiten des Verbindungsrahmens (41) sicher mit dem inneren Ende des Tragarms (40) verbunden ist; und
wobei die Durchgangsöffnung (42) des Verbindungsrahmens (41) durch eine der gegenüberliegenden Seiten des Verbindungsrahmens (41) gebildet ist, welche dem Tragarm (40) gegenüberliegt, und mit der Durchgangsöffnung (222) einer entsprechenden Seitenwand (22B) der Basis (20) ausgerichtet ist;
wobei die vordere Seite des Verbindungsrahmens (41) mit und zwischen den gegenüberliegenden Seiten des Verbindungsrahmens (41) gebildet ist;
wobei die innere Seite des zweiten axialen Rotators (50) sicher in der Durchgangsöffnung (222) der Seitenwand (22B) gebildet ist, welche der Durchgangsöffnung (42) des Verbindungsrahmens (41) gegenüberliegt;
wobei die äußere Seite des zweiten axialen Rotators (50) sich aus der Basis (20) durch die entsprechende Durchgangsöffnung (222) hinaus erstreckt;
wobei der Rotorkopf (51) sicher mit einer der gegenüberliegenden Seiten des Verbindungsrahmens (41) verbunden ist, welche dem Tragarm (40) gegenüberliegt; und
wobei der zweite axiale Rotator (50) eine Durchgangsöffnung (52) hat, welche durch die Seiten des zweiten axialen Rotators (50) gebildet ist und mit der Durchgangsöffnung (42) des Verbindungsrahmens (41) verbunden ist.

4. Die dreiaxiale Antriebsvorrichtung gemäß einem der Ansprüche 1 oder 2 oder 3, wobei
das Verbindungsende der Elektrodenhalterung (70) mit dem Halterungsende der Elektrodenhalterung (70) gegenüberliegend dem Rotorkopf (61) des dritten axialen Rotators (60) gebildet ist; und
wobei der Klemmblock (71) der Elektrodenhalterung (70) an dem Verbindungsende der Elektrodenhalterung (70) angebracht ist und aufweist:
ein unteres Ende; und
eine Nase (72), die an dem unteren Ende des Klemmblocks (71) gebildet ist und einen Winkel von 45 Grad bezüglich einer Achse der Elektrodenhalterung (70) aufweist.

5. Die dreiaxiale Antriebsvorrichtung gemäß Anspruch 4, wobei der Rotorkopf (31) des ersten axialen Rotators (30) an dem Unterteil des ersten axialen Rotators (30) angebracht ist;
wobei der zweite axiale Rotator (50) sicher mit der Basis (20) und dem Tragrahmen (40) verbunden ist, wobei die innere Seite des zweiten axialen Rotators (50) sicher in der Basis (20) angebracht ist, wobei die äußere Seite des zweiten axialen Rotators (50) sich aus der Basis (20) heraus erstreckt, und der Rotorkopf (51) des zweiten axialen Rotators (50) an der inneren Seite des zweiten axialen Rotators (50) angebracht ist;
wobei die dreiaxiale Antriebsvorrichtung (1) einen Oberteil aufweist, der in der Verbindungshalterung (10) angebracht ist; und
wobei der dritte axiale Rotator (60) sicher mit dem Tragarm (40) verbunden ist und die innere Seite des dritten axialen Rotators (60) ist sicher in der Vorderseite des Verbindungsrahmens (41) des Tragarms (40) angebracht, wobei die äußere Seite des dritten axialen Rotators (60) sich aus dem Verbindungsrahmen (41) über die Vorderseite des Verbindungsrahmens (41) heraus erstreckt, und der Rotorkopf (61) ist an der äußeren Seite des dritten axialen Rotators (60) angebracht.

## Revendications

1. Dispositif d'entraînement triaxial pour un machine-outil à électrodécharge ayant un mécanisme à trois axes de revêtement (2) avec trois axes (les axes X, Y et Z) et une électrode-outil (3), le dispositif d'entraînement triaxial (1) étant **caractérisé en ce qu'**il comprend :
un premier dispositif de rotation axial (30) ayant une partie supérieure, un fond, une tête rotative (31) et un trou débouchant (32) ;
un deuxième dispositif de rotation axial (50) ayant un côté interne, un côté externe, une tête rotative (51) et un trou débouchant (52) ; et
un troisième dispositif de rotation axial (60) ayant un côté interne, un côté externe et une tête rotative (61) ;
moyennant quoi les premier, deuxième et troisième dispositifs de rotation (30, 50, 60) sont adaptés pour être commandés par la machine-outil à électrodécharge pour fournir des rotations tridimensionnelles à l'électrode-outil (3) ;
un support de raccordement (10) étant adapté pour se raccorder de manière fixe au mécanisme à trois axes de revêtement (2) de la machine-outil à électrodécharge et ayant un tube de siège creux (12) et une plaque inférieure (11) ;
moyennant quoi le premier dispositif de rotation axial (30) est monté sur la plaque inférieure (11) du support de raccordement (10), la partie supérieure du premier dispositif de rotation axial (30) est montée dans le tube de siège creux (12) et le fond du premier dispositif de rotation axial (30) s'étend hors du support de raccordement (10) ;
une base (20) raccordée, de manière fixe, à la tête rotative (31) du premier dispositif de rotation axial (30) pour permettre à la base (20) de tourner par rapport au support de raccordement (10) autour du mécanisme à trois axes de revêtement (2) le long de l'axe Z du mécanisme à trois axes de revêtement (2) et ayant deux parois latérales (22A, 22B) avec un espace (23) entre lesdites parois latérales (22A, 22B), lesdites parois latérales (22A, 22B) ayant des trous débouchants (221, 222) alignés formés à l'intérieur de ces dernières ;
un bras de support (40) monté, en rotation, dans l'espace (23) de la base (20) et ayant une extrémité externe, une extrémité interne et un bâti de raccordement (41), l'extrémité externe étant montée, en rotation, dans l'un des trous débouchants (221) de la base (20), l'extrémité interne du bras de support (40) s'étendant dans l'espace (23) de la base (20), et le bâti de raccordement (41) étant raccordé à l'extrémité interne du bras de support (40) et ayant deux côtés opposés, un côté avant et un trou débouchant (42), les côtés opposés du bâti de raccordement (41) faisant respectivement face aux parois latérales (22A, 22B) de la base (20) ;
moyennant quoi le côté interne du deuxième dispositif de rotation axial (50) est monté, de manière fixe, dans le trou débouchant (222) de la paroi latérale (22B) de la base (20), le côté externe du deuxième dispositif de rotation axial (50) s'étend hors de la base (20), et la tête rotative (51) du deuxième dispositif de rotation axial (50) est raccordée, de manière fixe, à l'un des côtés opposés du bâti de raccordement (41) pour permettre au bâti de raccordement (41) de tourner par rapport à la base (20) autour du mécanisme à trois axes de revêtement (2) le long de l'axe X du mécanisme à trois axes de revêtement (2) ;
moyennant quoi le côté interne du troisième dispositif de rotation axial (60) est raccordé, de manière fixe, au côté avant du bâti de raccordement (41) du bâti de support (40), et le côté externe du troisième dispositif de rotation axial (60) s'étend hors du bâti de raccordement (41) ;
un dispositif de support d'électrode (70) étant adapté pour se raccorder à l'électrode-outil (3) de la machine-outil à électrodécharge et ayant une extrémité de montage, une extrémité de raccordement et un bloc de serrage (71) ; et
moyennant quoi l'extrémité de montage du dispositif de support d'électrode (70) est montée, de manière fixe, sur la tête rotative (61) du troisième dispositif de rotation axial (60) pour permettre au dispositif de support d'électrode (70) de tourner par rapport au bâti de raccordement (41) du bras de support (40) autour du mécanisme à trois axes de revêtement (2) le long de l'axe Y du mécanisme à trois axes de revêtement (2).

2. Dispositif d'entraînement triaxial selon la revendication 1, dans lequel :
le tube de siège (12) est adapté pour se raccorder, de manière fixe, au mécanisme à trois axes de revêtement (2) le long de l'axe Z du mécanisme à trois axes de revêtement (2) et a :
une chambre ; et
une extrémité inférieure ; et
la plaque inférieure (11) est montée, de manière fixe, sur l'extrémité inférieure du tube de siège (12) et a un trou central (111) formé à travers la plaque inférieure (11) et communiquant avec la chambre du tube de siège (12) ;
la partie supérieure du premier dispositif de rotation axial (30) est montée dans la chambre du tube de siège (12) ;
le fond du premier dispositif de rotation axial (30) s'étend hors du support de raccordement (10) via le trou central (111) de la plaque inférieure (11) ; et
la base (20) a :
une plaque supérieure (21) raccordée, de manière fixe, à la tête rotative (31) du premier dispositif de rotation axial (30) et ayant :
une partie supérieure raccordée, de manière fixe, à la tête rotative (31) ; et
un fond ; et
dans lequel les parois latérales (22A, 22B) de la base (20) sont formées sur et font saillie vers le bas à partir du fond de la plaque supérieure (21) et sont parallèles entre eux.

3. Dispositif d'entraînement triaxial selon la revendication 2, dans lequel :
la plaque supérieure (21) a :
un centre ;
un bord latéral ; et
une rainure de fil (211) formée dans la partie supérieure de la plaque supérieure (21) entre le centre et le bord latéral de la plaque supérieure (21) et communiquant avec le trou débouchant (32) du premier dispositif de rotation axial (30) ;
le trou débouchant (32) du premier dispositif de rotation axial (30) est formé à travers la partie supérieure et le fond du premier dispositif de rotation axial (30) et communique avec la chambre du tube de siège (12) ;
l'un des côtés opposés du bâti de raccordement (41) est raccordé, de manière fixe, à l'extrémité interne du bras de support (40) ; et
le trou débouchant (42) du bâti de raccordement (41) est formé à travers l'un des côtés opposés du bâti de raccordement (41) qui est opposé au bras de support (40), et s'aligne avec le trou débouchant (222) d'une paroi latérale (22B) correspondante de la base (20) ;
le côté avant du bâti de raccordement (41) est formé avec et entre les côtés opposés du bâti de raccordement (41) ;
le côté interne du deuxième dispositif de rotation axial (50) est monté, de manière fixe, dans le trou débouchant (222) de la paroi latérale (22B) qui fait face au trou débouchant (42) du bâti de raccordement (41) ;
le côté externe du deuxième dispositif de rotation axial (50) s'étend hors de la base (20) via le trou débouchant (222) correspondant ;
la tête rotative (51) est raccordée, de manière fixe, à l'un des côtés opposés du bâti de raccordement (41) qui est opposé au bras de support (40) ; et
le deuxième dispositif de rotation axial (50) a un trou débouchant (52) formé à travers les côtés du deuxième dispositif de rotation axial (50) et communiquant avec le trou débouchant (42) du bâti de raccordement (41).

4. Dispositif d'entraînement triaxial selon la revendication 1 ou 2 ou 3, dans lequel :
l'extrémité de raccordement du dispositif de support d'électrode (70) est formée avec l'extrémité de montage du dispositif de support d'électrode (70) opposée à la tête rotative (61) du troisième dispositif de rotation axial (60) ; et
le bloc de serrage (71) du dispositif de support d'électrode (70) est monté sur l'extrémité de raccordement du dispositif de support d'électrode (70) et a :
une extrémité inférieure ; et
un nez (72) formé sur l'extrémité inférieure du bloc de serrage (71) et ayant un angle de 45 degrés par rapport à un axe du dispositif de support d'électrode (70).

5. Dispositif d'entraînement triaxial selon la revendication 4, dans lequel :
la tête rotative (31) du premier dispositif de rotation axial (30) est montée sur le fond du premier dispositif de rotation axial (30) ;
le deuxième dispositif de rotation axial (50) est raccordé, de manière fixe, à la base (20) et au bâti de support (40), le côté interne du deuxième dispositif de rotation axial (50) est monté, de manière fixe, dans la base (20), le côté externe du deuxième dispositif de rotation axial (50) s'étend hors de la base (20) et la tête rotative (51) du deuxième dispositif de rotation axial (50) est montée sur le côté interne du deuxième dispositif de rotation axial (50) ;
le dispositif d'entraînement triaxial (1) a une partie supérieure montée dans le support de raccordement (10) ; et
le troisième dispositif de rotation axial (60) est raccordé, de manière fixe, au bras de support (40), le côté interne du troisième dispositif de rotation axial (60) est monté, de manière fixe, dans le côté avant du bâti de raccordement (41) du bras de support (40), le côté externe du troisième dispositif de rotation axial (60) s'étend hors du bâti de raccordement (41) via le côté avant du bâti de raccordement (41), et la tête rotative (61) est montée sur le côté externe du troisième dispositif de rotation axial (60).
